# EUROPEAN PATENT SPECIFICATION

(11) **EP 3 316 390 B1**
(45) Date of publication and mention of the grant of the patent: **25.12.2019**
(21) Application number: 16814650.4
(22) Date of filing: 21.06.2016
(51) Int. Cl.: H01M 10/63, H01M 10/6563, H01M 10/613, H01M 10/42, H02K 9/06

(54) **SYSTEM FOR CONTROLLING MULTIPLE COOLING FANS FOR BATTERY PACK**
SYSTEM ZUR STEUERUNG MEHRERER KÜHLUNGSLÜFTER FÜR EINEN AKKUSATZ
SYSTÈME DE COMMANDE DE PLUSIEURS VENTILATEURS DE REFROIDISSEMENT D'UNE BATTERIE

(30) Priority: 24.06.2015 KR 20150090011; 27.08.2015 KR 20150121007
(43) Date of publication of application: 02.05.2018
(73) Proprietor: Amotech Co. Ltd., Incheon 405-846 (KR)
(72) Inventor: KIM, Jin Gwan, Gangwon-do 24424 (KR); KIM,Byung Soo, Gyeonggi-do 13951 (KR)
(74) Representative: Lambacher, Michael
(86) International application number: PCT/KR2016/006568
(87) International publication number: WO 2016/208937

(56) References cited:
- EP-A1- 2 069 879
- JP-A- 2013 181 681
- KR-A- 20090 046 818
- KR-A- 20120 048 173
- KR-A- 20140 147 171
- KR-A- 20150 067 842
- US-A1- 2014 356 657

## Description

### TECHNICAL FIELD

The present invention relates to a multiple cooling fan control system for a battery pack, which is capable of using a wire harness made of a minimum number of wirings by driving a plurality of cooling fans for cooling the battery pack while using a single control board.

### BACKGROUND ART

Generally, an electric vehicle is a vehicle developed as a countermeasure against exhaust gas, and has some advantages of less noise and no exhaust gas in comparison with a conventional internal combustion engine equipped vehicle.

Such an electric vehicle is a pollution-free vehicle that drives an electric motor with electric energy and rotates wheels through a power transmission device, in which a battery is used as a power source necessary for driving force.

The battery used in the electric vehicle has the advantage of generating no exhaust gas and the very small noise because a battery in which a plurality of rechargeable secondary cells are packed is used as a main power source.

However, since the battery has an internal resistance, heat is generated in charging and discharging. Therefore, the battery temperature rises as the battery is repeatedly charged and discharged.

In addition, the life of such a battery is shortened when the battery is continuously used at a high temperature. Therefore, in order to protect the battery, the charge/discharge current is limited when the battery is at a high temperature. In this case, however, the propulsive force of the vehicle is not sufficiently obtained, and in the hybrid vehicle, the fuel consumption of the internal combustion engine deteriorates to worsen fuel efficiency.

For this reason, a battery management system (BMS) module is installed in a battery pack assembly of an electric vehicle and/or a hybrid vehicle, to thus play a role of preventing safety accidents such as ignition and explosion of the battery due to overcharge or overdischarge of the battery, or temperature rise when using the battery, and keeping the battery in an optimal state.

The BMS module measures the voltage and temperature of each battery to determine whether the battery is abnormal. The electrode terminal of each battery is electrically connected to a printed circuit board (PCB) and a temperature sensor, and the voltage of each electrode terminal measured by the PCB and the temperature of each electrode terminal measured by the temperature sensor are transferred to the BMS module, which controls multiple cooling fans to cool multiple battery packs.
In EP 2 069 879 A0 a cooling fan module is described. The cooling fan module comprises: a module housing; and a fan assembly comprising a blade assembly coupled to a motor disposed within a fan housing that is disposed within said module housing, wherein the fan housing has an inlet and an outlet that is disposed within said module housing. The cooling fan module further comprises a fan control circuit board disposed within said module housing and outside of the fan housing, wherein said fan control circuit board is coupled to the motor; and an electrical connector (56) coupled to said fan control circuit board and projecting outside of said module housing.

Further, Korean Patent Application Publication No. 10-2003-0097103 (Patent Document 1) discloses an apparatus for controlling battery cooling in an electric vehicle, the battery cooling control apparatus including: a battery tray configured such that a plurality of batteries are arranged in respective predetermined areas; a battery temperature detector for detecting temperatures of the plurality of batteries; a BMS controller for generating a drive control signal for an independent cooling control of the battery for each of the predetermined areas to reduce a temperature difference between the temperatures of the plurality of batteries detected through the battery temperature detector; cooling fans installed individually in the predetermined areas of the battery tray and driven in response to the drive control signal supplied from the BMS controller to cool batteries arranged in the predetermined areas; and a cooling fan drive controller that is electrically connected between the BMS controller and the cooling fans to intermittently flow the drive control signal supplied from the BMS controller to the cooling fans.

In Patent Document 1, a cooling fan control cable, which is set to classify each cooling fan driving state into a high, medium, low, and off state, is electrically connected to the BMS controller, so that independent cooling fan control reduces the temperature difference between batteries to suppress battery performance degradation.

However, in Patent Document 1, the cooling fan driving state is set to one of the four states, and the control has not been made to a continuous value.

Meanwhile, axial-flow fans are used as a plurality of conventional cooling fans for cooling batteries, the plurality of conventional cooling fans are modularized with guides, and installed in battery packs. In addition, a plurality of the modularized cooling fans are integrated and fixed by mounting brackets.

In this case, each of the cooling fans is connected to a drive motor for driving respective impellers through a pair of power lines, a FG signal line for indicating the rotational speed of the motor, and a control line (duty ratio value for pulse width modulation (PWM) control). For example, in order to drive the three cooling fans, a wire harness with twelve wires is used to connect to a plurality of pin connectors, which leads to an increase in an assembly cost.

In addition, conventionally, since the size of the drive PCB for driving the respective drive motors is limited, it is difficult to employ a signal processing device, for example, a microprocessor (CPU) for realizing various functions due to space limitation. Therefore, there is a burden to directly control the cooling fan drive motor from the battery management system (BMS).

### DISCLOSURE

### TECHNICAL PROBLEM

Accordingly, the present invention has been made to solve the above problems, and it is an object of the present invention to provide a multiple cooling fan control system for a battery pack capable of mounting a signal processing processor capable of performing various functions on a control board by configuring the control board using a single printed circuit board having a large size covering a plurality of cooling fans to utilize a space between a motor and another motor, in order to cool the battery pack.

It is another object of the present invention to provide a multiple cooling fan control system for a battery pack, which can be connected to a battery management system by using a wire harness made of a minimum number of wirings by not only mounting a processor for signal processing on a control board of a single printed circuit board but also directly mounting a plurality of cooling fans on the control board.

It is another object of the present invention to provide a multiple cooling fan control system for a battery pack, which includes a processor for signal processing in a control board of a single printed circuit board, to receive control values from a battery management system, to operate RPM control of a plurality of cooling fans, independently or through a centralized control to thus achieve stability of system.

It is another object of the present invention to provide a multiple cooling fan control system for a battery pack, which can maintain the overall air volume by increasing an air volume of remaining cooling fans when abnormality occurs from among a plurality of cooling fans.

### TECHNICAL SOLUTION

According to one aspect of the present invention, there is provided a multiple cooling fan control system for a battery pack, which includes: a housing including a first housing and a second housing; the first housing having a plurality of suction ports arranged at intervals; a plurality of cooling fans arranged corresponding to the plurality of suction ports on a rear surface of the first housing and generating a ventilation power; the second housing coupled to the first housing to receive the plurality of cooling fans and having a plurality of discharge ports; a control device installed inside the second housing for controlling the cooling fans and supplying electric power to the cooling fans, wherein the control device includes at least one signal processing device for driving the plurality of cooling fans in accordance with motor drive information received from a battery management system (BMS).

The control device may include: a control board installed inside the second housing and having the plurality of cooling fans fixedly installed therein; the at least one signal processing device mounted on the control board and each generating a plurality of drive signals for controlling the plurality of cooling fans in accordance with the motor drive information received from the battery management system (BMS); a plurality of drivers mounted on the control board and each driving a motor of each of the plurality of cooling fans in accordance with the plurality of drive signals generated from the at least one signal processing device; and a wire harness for connecting the battery management system (BMS) and the control board, and transmitting and receiving a power source for driving the motors of the plurality of cooling fans, driving information of the motors, and status information of the motors, wherein the power supply for driving the plurality of motors and the drive information of the motors can be commonly received through the wire harness.

In addition, the multiple cooling fan control system may further include a communication module which is provided between the wire harness and the at least one signal processing device to receive the driving information of the motors and transmit the status information of the motors, and the wire harness may include three wires for commonly receiving an external power supply (such as Vdd and Gnd) and a power control signal (such as Power Control), and two wires for the communication module.

The communication module may employ any one of a controller area network (CAN) communication system, a local interconnect network (LIN) communication system, and a universal asynchronous receiver/transmitter (UART) communication system.

Each of the cooling fans may include: a motor in which a stator and a rotor are formed in a radial gap type; and impellers which rotate together with the rotor and suck air in an axial direction of the suction ports to discharge air in a radial direction thereof. In this case, the motor may include a bearing bushing having a throughhole formed at a central portion of the bearing bushing and whose one end is fixed to the control board; the stator whose inner circumferential portion is fixed to the outer circumferential portion of the bearing bushing; a pair of sleeve bearings spaced apart from each other in the throughhole of the bearing bushing; a rotating shaft rotatably supported by the pair of sleeve bearings; and the rotor disposed at an outer circumferential portion of the stator with an air gap therebetween, the rotor having the rotating shaft coupled to a central portion of a rotor support body and impellers coupled to an outer circumferential portion of the rotor.

The control board may include a main body that is disposed on a rear surface of the first housing in which the suction ports are installed, and the at least one signal processing device and the drivers are disposed; and a plurality of connection portions protruding from the main body toward a rear portion of the suction ports and to which the bearing bushing is fixed wherein the motor is supported to the bearing bushing.

The at least one signal processing device may receive the duty ratio value required for the RPM control of the motor from the battery management system (BMS) through a communication input of the wire harness, and may output the current, voltage, temperature, and state information of the motor to the battery management system (BMS).

The at least one signal processing device may calculate a current rotational speed of the motor from a rotor position signals of the motor received from a hall sensor provided adjacent to the motor and may transmit the rotational speed signal of the motor to the battery management system (BMS).

Further, the multiple cooling fan control system for a battery pack according to some embodiments of the present invention further includes a plurality of guide portions having a cochlea structure and collecting air radially discharged by the cooling fans to be integrally formed with the first housing to guide an air flow to one side of the cooling fans; and a plurality of duct portions integrally formed with the second housing to connect between each of the guide portions and each of the discharge ports.

According to another aspect of the present invention, there is provided a multiple cooling fan control system for a battery pack, which includes: a housing having a plurality of suction ports and a plurality of discharge ports on one side and the other side of the housing, respectively; a plurality of cooling fans having a plurality of impellers and motors installed in the housing in correspondence to the plurality of suction ports; a plurality of guide portions having a cochlea structure and collecting air radially discharged by the cooling fans to be integrally formed with the housing (10) to guide an air flow to one side of the cooling fans; a plurality of duct portions integrally formed with the housing to connect between each of the guide portions and each of the discharge ports; and a control device for controlling driving of the plurality of cooling fans to cool the battery pack. The control device may include: a control board installed inside the housing and having the plurality of cooling fans fixedly installed therein; at least one signal processing device mounted on the control board and each generating a plurality of drive signals for controlling the plurality of cooling fans in accordance with motor drive information received from a battery management system (BMS); a plurality of drivers mounted on the control board and each driving a motor of each of the plurality of cooling fans in accordance with the plurality of drive signals generated from the at least one signal processing device; and a wire harness for connecting the battery management system (BMS) and the control board, and transmitting and receiving a power source for driving the motors of the plurality of cooling fans, driving information of the motors, and status information of the motors, wherein the power supply for driving the motors of the plurality of cooling fans and the drive information of the motors can be commonly received through the wire harness.

The at least one signal processing device may control the RPM of each motor by performing a proportional-integral-derivative (PID) control to reach a target RPM received from the battery management system (BMS), and may detect the overcurrent, voltage, and temperature of each motor and compare the detected overcurrent, voltage, and temperature with predetermined reference values, to thus stop the motor drive when the detected values are larger than predetermined reference values.

In addition, the at least one signal processing device may limit the drive output with respect to a motor in which an abnormality occurs when an abnormality occurs in one of the plurality of motors, and may drive the rest of the motors beyond the normal driving power, to thereby control to obtain the same air volume as before the occurrence of the abnormality.

### ADVANTAGEOUS EFFECTS

As described above, according to some embodiments of the present invention, a control board may be configured by using a single printed circuit board having a large size to cover a plurality of cooling fans to utilize a space between a motor and another motor for cooling.the battery pack, to thereby mount a processor for signal processing that can perform various functions on the control board.

Further, in some embodiments of the present invention, a signal processing processor may be mounted on a control board of a single printed circuit board, and a plurality of cooling fans may be directly mounted on the control board, so that a harness having a minimum number of wirings may be used to connect to a battery management system (BMS).

Further, in some embodiments of the present invention, when an abnormality occurs from among a plurality of cooling fans, the air volume of the remaining cooling fans may be increased, so that the overall air volume can be kept identically to before the occurrence of the abnormality.

Furthermore, in some embodiments of the present invention, a control of a plurality of cooling fans can be operated independently or through a centralized control to thus achieve stabilization of the system.

### BRIEF DESCRIPTION OF THE DRAWINGS

FIGS. 1 to 3 are block circuit diagrams showing a multiple cooling fan control system for a battery pack according to first to third embodiments of the present invention, respectively.
FIGS. 4 to 6 are flowchart views illustrating an operation of a multiple cooling fan control system for a battery pack according to the first to third embodiments of the present invention, respectively.
FIG. 7 is a front perspective view showing a battery cooling apparatus to which a multiple cooling fan control system for a battery pack according to the first to third embodiments of the present invention is applied.
FIG. 8 is a front view of the battery cooling apparatus shown in FIG. 7.
FIG. 9 is a cross-sectional view taken along the line A-A' in FIG. 8.
FIG. 10 is a rear exploded perspective view showing a state in which a second housing serving as a cover is disassembled from a first housing in a rear surface of a battery cooling apparatus according to the present invention.

### BEST MODE

Hereinafter, embodiments of the present invention will be described in detail with reference to the accompanying drawings. The sizes and shapes of the components shown in the drawings may be exaggerated for clarity and convenience.

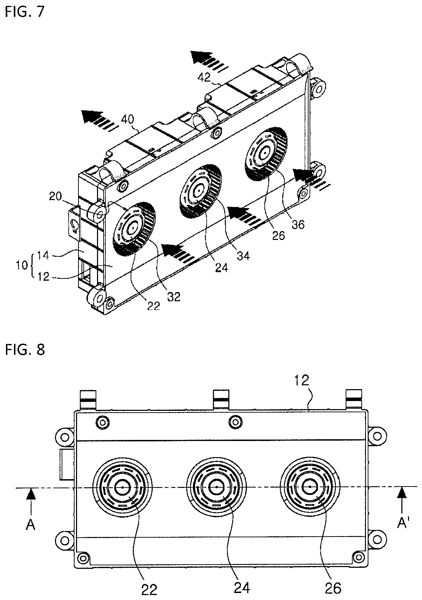

First, before describing a multiple cooling fan control system for a battery pack according to first to third embodiments of the present invention, a battery cooling apparatus to which the present invention is applied will be described with reference to FIGS. 7 to 10.

Referring to FIGS. 7 to 10, the battery cooling apparatus to which the present invention is applied includes: a plurality of suction ports 32, 34, and 36 installed on a side surface of a battery pack (not shown) and through which air passing through the battery pack (not shown) is sucked; a housing 10 provided with a plurality of discharge ports 40 and 42 through which air is discharged to the outside; a plurality of cooling fans 20 which are installed at intervals in the housing 10 so as to generate a ventilation power; and a control board 50 which is installed in the housing 10 and electrically connected to the cooling fans 20 to control the cooling fans 20 and supply electric power to the cooling fans 20.

The battery pack includes a plurality of battery cells spaced apart from each other to form one battery pack. A battery cooling apparatus is installed on one side of the battery pack. When the battery cooling apparatus is driven, air is sucked into spaces between the battery cells, and each battery cell is cooled while the air passing between the cells.

In addition, suction ducts in which external air is sucked may be provided on the other side of the battery pack, that is, on the opposite side of the side where the cooling apparatus is installed.

The housing 10 includes: a first housing 12 in which the plurality of suction ports 32, 34, and 36, the plurality of cooling fans 20 corresponding to the plurality of suction ports 32, 34, and 36; and the control board 50 are arranged; and a second housing 14 coupled to the first housing 12 in the form of a cover and having the discharge ports 40 and 42 formed in a rear or upper side of the second housing 14.

The plurality of cooling fans 20 (for example, 22, 24, and 26) are disposed in the first housing 12, and each of the cooling fans 20 is a centrifugal blower, in which impellers 84 having a sirocco fan structure are connected to a rotating shaft 74 of a rotor 82 so as to radially discharge air flowing in an axial direction of the rotating shaft 74.Further, the outer side of each of the impellers 84 has a cochlear structure, and guide portions 62 for guiding an air flow in one direction by collecting the air radially discharged by the impellers 84 of the cooling fans 20 are formed in the same as the number of the cooling fans 20.For example, when there are three cooling fans 20 (e.g., 22, 24, and 26), three guide portions 62 are formed in the first housing 12.

An air discharge portion 64 through which air of each of the cooling fans 20 is discharged is formed at an upper end of each of the guide portions 62. The air discharge portion 64 is connected to a duct portion 66 formed in the second housing 14 and the exit of each of the duct portions 66 is connected to the discharge ports 40 and 42 through which the air collected in the duct portion is discharged to the outside at the rear upper end of the second housing 14.

The discharge ports 40 and 42 may be formed at the rear end of the upper portion of the second housing 14 and may be formed as one discharge port, or two discharge ports. In addition, the discharge ports may be formed as three discharge ports in the same as the number of the cooling fans. The illustrated embodiment has two discharge ports 40 and 42.

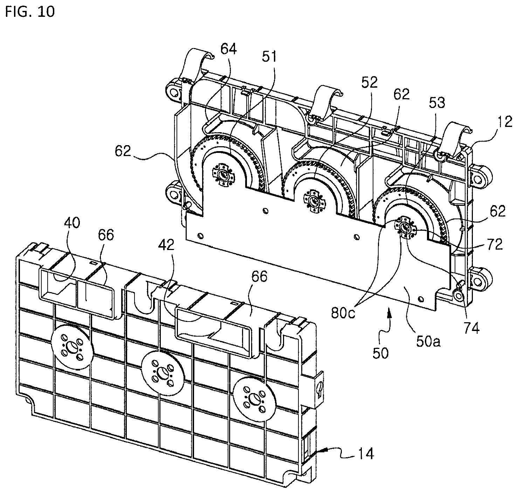

In the embodiment shown in FIG. 10, the discharge ports 40 and 42 are formed on the upper rear side of the second housing 14 so that air is discharged to the rear side of the second housing 14. In another embodiment, the discharge ports may be formed on the upper surface of the second housing 14 so that air can be discharged in the upward direction of the second housing 14.

Therefore, the battery cooling apparatus according to some embodiments of the present invention can freely change the positions of the discharge ports in accordance with the characteristics of a place where a battery pack of an electric automobile or the like is installed, thereby improving the compatibility.

The second housing 14 is hermetically coupled to the first housing 12 and is in close contact with one surface of the battery pack. The edge of the second housing 14 is in close contact with the edge of the battery pack and a space is provided on the inner surface of the second housing 14 so that air passing through the battery cells can be introduced into the space.

The battery cooling apparatus according to some embodiments of the present invention is provided with the plurality of cooling fans 22, 24, and 26 and the plurality of suction ports 32, 34, and 36 so as to be disposed on one side of the battery pack. Accordingly, an air flow may be made to uniformly cool the whole surface of the battery cells, so that the battery cells are prevented from being locally cooled. That is, when the number of the cooling fans 20 is three, the number of the suction ports 32, 34, and 36 is also three, and the three suction ports 32, 34, and 36 are arranged at a certain interval on one surface of the battery pack. Accordingly, an air flow may be distributed so as to evenly cool the whole surface of the battery pack.

The cooling fans 20 may include a first cooling fan 22, a second cooling fan 24, and a third cooling fan 26, which are installed at predetermined intervals in the first housing 12.The cooling fans 20 may be two or three or more depending on the size of the battery pack.

The first to third cooling fans 22, 24 and 26 include first to third motors 5-1 to 5-3, each motor having a stator 80 and a rotor 82 formed in a radial gap type, and impellers 84 connected to a rotating shaft 74 of the rotor 82, respectively. Each of the first to third motors 5-1 to 5-3 may be constituted by, for example, a core type brushless direct-current (BLDC) single-phase motor. The stator 80 is fixed to the outer circumference of a bearing bushing 72 having a throughhole at a center of the bearing bushing 72 and made of, for example, brass. A pair of sleeve bearings 86 and 88 is installed at an interval in the throughhole of the bearing bushing 72, and the rotating shaft 74 is rotatably supported on the pair of sleeve bearings 86 and 88.

The control board 50 for driving and controlling the first to third cooling fans 22, 24, and 26 is disposed in the space formed by the first housing 12 and the second housing 14.The control board 50 may adopt a fixed structure, for example, by being fixed to the second housing 14 and then pressing the first housing 12. In this case, the control board 50 is assembled in such a manner that the control board 50 is coupled to a securing hook or an escape preventing groove formed integrally with the second housing 14 without using a separate fixing bolt or securing device. When the first housing 12 and the second housing 14 are assembled, the guide portions 62 protruding from the first housing 12 can be pressed and fixed to the control board 50.

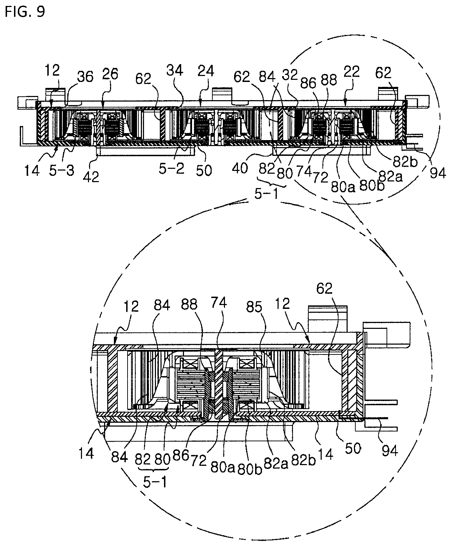

One end of the bearing bushing 72 passes through the throughhole of the control board 50 as shown in FIGS. 9 and 10, and then is bent and fixed to the control board 50.

The stator 80 includes a stator core 80a coupled to the outer circumference of the bearing bushing 72 and a stator coil 80b wound around a bobbin formed on the outer circumference of the stator core 80a. In addition, the stator 80 is fixed to the control board 50 via the bearing bushing 72. The start and end terminals of the stator coil 80b are connected to a driver to be described later via terminal pins 80c fixed to the control board 50.

A magnet 82a and a back yoke 82b constituting the rotor 82 are formed in an annular shape with an air gap on the outer periphery of the stator 80. The rotor 82 is integrally formed with the rotating shaft 74 at a central portion of the rotor 82 via a rotor support body 85. The impeller 84 having a sirocco fan structure is provided on the rotor support body 85, in which a plurality of blades are formed integrally with the rotor support body 85 so that air is sucked in the axial direction of the rotor 82 and air is radially discharged from the rotor 82.

As shown in FIGS. 9 and 10, the control board 50 includes: a main body 54 disposed corresponding to the lower side of the rear surface of the first housing 12 and fixed to the second housing 14; a first connection portion 51 protruded from one side of the main body 54 and electrically connected to the first cooling fan 22; a second connection portion 51 protruded from the center of the main body 54 and electrically connected to the second cooling fan 24; and a third connection portion 53 protruded from the other side of the main body 54 and electrically connected to the third cooling fan 26.

The control board 50 shown in FIGS. 9 and 10 has a configuration in which the first to third connection portions 51 to 53 are protruded from the main body 54, but may have a rectangular shape having a size corresponding to the bottom of the second housing 14.

In this case, the second housing 14 may have a groove on the bottom thereof and the control board 50 may be disposed without having a step on the bottom groove.

The multiple cooling fan control system for a battery pack according to some embodiments of the present invention is implemented by being mounted on the single control board 50 shown in FIG. 10.

In some embodiments of the present invention, the control board 50 is configured by using a single printed circuit board (PCB) having a large size which covers the plurality of cooling fans 22, 24, and 26 to utilize a space between a cooling fan (or motor) and another cooling fan (or motor) in order to cool the battery pack. Accordingly, a signal processing processor (such as CPU) capable of performing various functions may be mounted on the control board.

In some embodiments of the present invention, the signal processing processor is mounted on the single control board 50, and the control board 50 is provided with a controller area network (CAN) communication unit 7 used for control of the interior of a vehicle. Accordingly, the multi-cooling fan control system for a battery pack, which can be easily connected to the battery management system (BMS), can be constructed using a wire harness 91, 92, or 93 made of a minimum number of wirings.

In the following description of the multiple cooling fan control system, a case where three cooling fans are used will be described as an example.

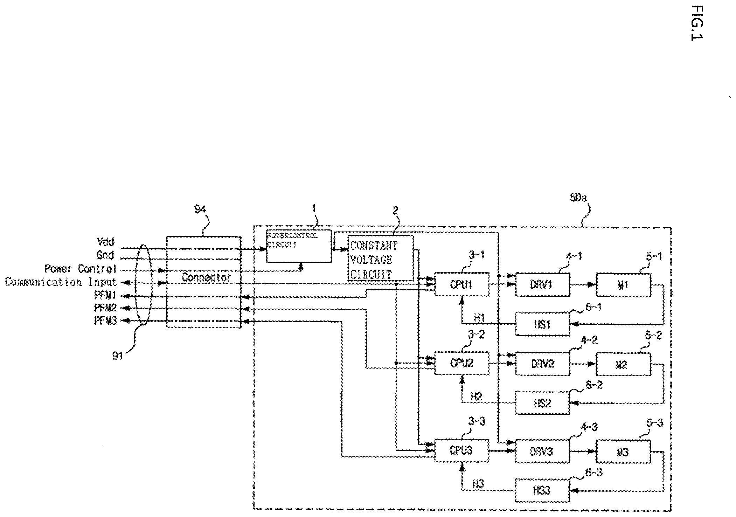

Referring to FIG. 1, the multiple cooling fan control system for a battery pack according to the first embodiment of the present invention includes three first to third control units (denoted as 3-1 to 3-3 and labeled as CPU1 to CPU3) corresponding to three cooling fans 22, 24, and 26 for driving the first to third motors (denoted as 5-1 to 5-3 and labeled as M1 to M3) for the cooling fans 22, 24, and 26, respectively.

In the multiple cooling fan control system of the first embodiment, the first to third drivers (denoted as 4-1 to 4-3 and labeled as DRV1 to DRV3) are connected to the first to third control units 3-1 to 3-3, and the first to third motors 5-1 to 5-3 are connected to the first to third drivers 4-1 to 4-3.

The first to third control units 3-1 to 3-3 are connected to first to third Hall sensors (denoted as 6-1 to 6-3 and labeled as HS1-HS3) which are provided adjacent to the first to third motors 5-1 to 5-3, to receive rotor position signals (H1-H3) of the respective motors, which are detected from the first to third Hall sensors 6-1 to 6-3.

The first to third motors 5-1 to 5-3 preferably employ a single-phase drive type BLDC motor, and may, of course, use other types of motors.

Each of the first to third control units (CPU1 to CPU3) 3-1 to 3-3 may be configured as a signal processing device such as a microcomputer or a microprocessor, and may be connected to a battery management system (BMS) and receive a duty ratio value required for a motor RPM control from the battery management system (BMS) as a communication input, generate a PWM drive signal whose pulse width is controlled in accordance with the received duty ratio, to then be applied to the first to third drivers (DRV1 to DRV3) 4-1 to 4-3, and detect current, voltage, temperature, and status information applied to the first to third motors (M1 to M3) 5-1 to 5-3 to then be transmitted to the battery management system (BMS) via the communication input.

In addition, the first to third control units 3-1 to 3-3 calculate the current rotational speeds of the first to third motors 5-1 to 5-3 from the rotor position signals (H1 to H3) of the respective motors received from the first to third hall sensors (HS1 to HS3) 6-1 to 6-3 and transmit the rotational speed signals (PFM1 to PFM3) of the respective motors to the battery management system (BMS).

The first to third drivers (DRV1 to DRV3) 4-1 to 4-3 may be constituted by, for example, a dual-mode P-channel and N-channel switching transistor as a single-phase full-wave driving circuit, and drive the first to third motors 5-1 to 5-3 according to the PWM drive signal applied from the third control units 3-1 to 3-3.The first to third drivers (DRV1 to DRV3) 4-1 to 4-3 may be constituted by a full-wave driving method or a half-wave driving method, and the circuit configuration may be changed according to the driving method. The number of signal lines connected to the motors 5-1 to 5-3 may vary.

The first to third control units 3-1 to 3-3, the first to third drivers 4-1 to 4-3, and the first to third Hall sensors 6-1 to 6-3 constituting the multiple cooling fan control system according to some embodiments of the present invention, are mounted on the single control board 50a provided on the rear surface of the first housing 12.

In addition, the control board 50a includes a power control circuit 1 which receives external power (Vdd and Gnd) of DC 48V applied from an external source (such as a battery pack) and a power control signal (Power Control) applied from the battery management system (BMS) and applies a motor drive voltage of DC 12V to the first to third drivers 4-1 to 4-3, and a constant voltage circuit 2 which receives the voltage of the power control circuit 1, and generates a driving voltage of DC 5V necessary for driving the first to third control units 3-1 to 3-3.

The power control circuit 1 has an inverse voltage prevention function and shuts off the power supply to cut off the output and reduce standby power when the cooling fans 22, 24 and 26 are not operated according to a power control signal (Power Control) applied from the battery management system (BMS).

The control board 50a is provided with a wire harness 91 including a 7-pin connector connected with seven wires from the outside. External power (Vdd and Gnd) of DC 48V, a power control signal (Power Control), a communication input received and transmitted between the control board 50a and the battery management system (BMS), and motor rotational speed signals PFM1 to PFM3 transmitted to the battery management system (BMS), are transmitted and received via the wire harness 91.

The communication input is used to receive a duty ratio value required for motor RPM control from the battery management system (BMS) and transmit the current, voltage, temperature and status information of the respective motors to the battery management system (BMS).

In the first embodiment described above, the external power supply (Vdd and Gnd), the power control (Power Control), and the communication input (Input) are commonly received as control signals for driving the three cooling fans 22, 24, and 26 via the wire harness 91 from the battery management system (BMS).

The control board 50a and the first to third control units 3-1 to 3-3, the first to third drivers 4-1 to 4-3, and the power supply device including the power control circuit 1 and the constant voltage circuit 2 constitutes a control device for controlling the cooling fans.

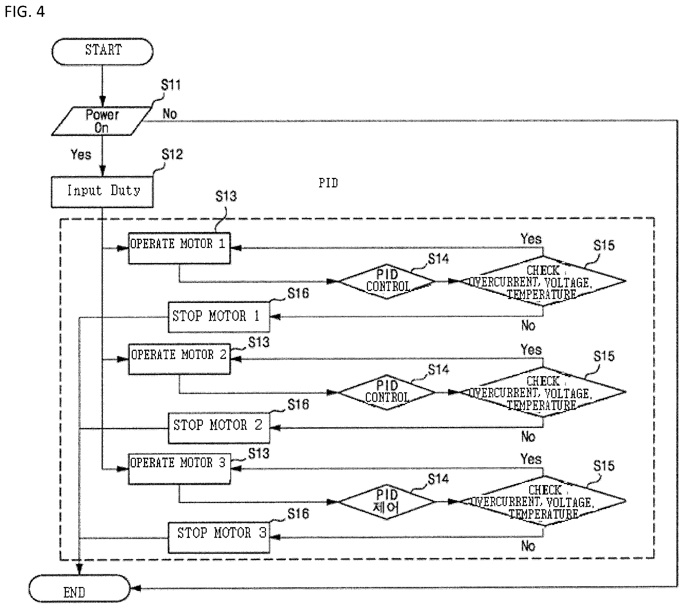

The multiple cooling fan control system for a battery pack according to the first embodiment controls the multiple cooling fans for the battery pack according to the flowchart shown in FIG. 4.

First, when external power sources Vdd and Gnd are applied to the control board 50a (S11), a motor drive voltage of DC 12V and a drive voltage of DC 5V are generated from the power control circuit 1 and the constant voltage circuit 2, respectively, to then be applied to the first to third drivers 4-1 to 4-3 and the first to third control units 3-1 to 3-3. Accordingly, the first to third control units 3-1 to 3-3 and the first to third drivers 4-1 to 4-3 are activated.

Thereafter, the first to third control units 3-1 to 3-3 receive the duty ratio values of the PWM drive signals corresponding to the target RPMs of the respective motors from the communication input commonly received from the battery management system (BMS) (S12), and generate PWM driving signals based on the received duty ratio values, respectively, to drive the first to third motors 5-1 to 5-3, respectively (S13).

In other words, the first to third control units 3-1 to 3-3 receive the rotor position signals H1-H3 of the respective motors received from the first to third Hall sensors (HS1 to HS3) 6-1 to 6-3, and alternately turn on switching transistors included in the first to third drivers 4-1 to 4-3 by referring to the received rotor position signals (H1-H3) of the respective motors, to thereby apply respective PWM driving signals to the stator coils. Accordingly, the first to third drivers 4-1 to 4-3 apply the PWM drive signals to the first to third motors 5-1 to 5-3, respectively, to thereby drive the rotors of the motors, respectively.

Thereafter, the first to third control units 3-1 to 3-3 detect RPMs of the first to third motors 5-1 to 5-3 based on the received rotor position signals (H1-H3) of the respective motors and transmit the motor rotational speed signals (PFM1 to PFM3) to the battery management system (BMS), and also perform the proportional-integral-derivative (PID) control to reach the target RPMs received from the battery management system (BMS) to thus control the RPMs of the first to third motors 5-1 to 5-3 (S14).

In this case, the first to third control units 3-1 to 3-3 detect the overcurrent, the voltage and the temperature flowing in the respective motors and compare them with predetermined reference values (S15). If the detected value is larger than a predetermined reference value, the motor drive is stopped (S16).

As described above, in some embodiments of the present invention, since the first to third control units 3-1 to 3-3 are provided on the control board 50a, the first to third control units 3-1 to 3-3 detect the overcurrent, voltage and temperature respectively flowing in the first to third motors 5-1 to 5-3, and compare the detected overcurrent, voltage and temperature with predetermined reference values, respectively, to detect the states of the respective motors. If an abnormality occurs in one of the three motors, the drive output with respect to the motor in which the abnormality occurs is limited, and only the remaining two motors are normally driven or driven beyond the normal driving power. Accordingly, it is possible to control the three motors so as to obtain the air volume generated by the three cooling fans 22, 24, and 26.

As described above, the multiple cooling fan control system for a battery pack according to the first embodiment commonly receives the duty ratio values of the PWM driving signals required for controlling the target RPMs of three motors from the battery management system (BMS) to one communication input line, and drives the first to third motors 5-1 to 5-3 with the same command in the control board 50a.

In some embodiments of the present invention, the first to third motors 5-1 to 5-3 for driving the impellers 84 of the three cooling fans 22, 24 and 26, that is, the stators 80 are mounted and fixed directly onto the single control board 50a of increased size. Accordingly, the output terminals of the first to third drivers 4-1 to 4-3 are directly connected to the stator coils 80b of the respective motors. In addition, the first to third Hall sensors 6-1 to 6-3 for detecting the rotor position signals of the respective motors are also directly mounted and fixed onto the single control board 50a.

In addition, since the first to third control units 3-1 to 3-3 are mounted on the control board 50a, the wire harness 91 can be constituted by the four wirings for receiving in common the external power sources (Vdd and Gnd), the power control signal, and the communication input and the three wirings necessary for transmitting the motor rotational speed signals (PFM1 to PFM3) of the respective motors to the battery management system (BMS). The number of wirings of the wire harness 91 can be made to be greatly reduced as compared with the conventional one.

Further, in some embodiments of the present invention, since the first to third control units 3-1 to 3-3 are mounted on the control board 50a, only the target RPM control signals are received from the battery management system (BMS) and thus a distributed control for independently controlling the first to third motors 5-1 to 5-3 can be implemented.

In the above-described first embodiment, it has been proposed that the control board should include three first to third control units 3-1 to 3-3, and the RPMs of the first to third motors 5-1 to 5-3 should be controlled. However, the present invention is not limited to the first embodiment, but the first and third motors 5-1 to 5-3 can be controlled by using one control unit 3-1 on the control board as in the second and third embodiments.

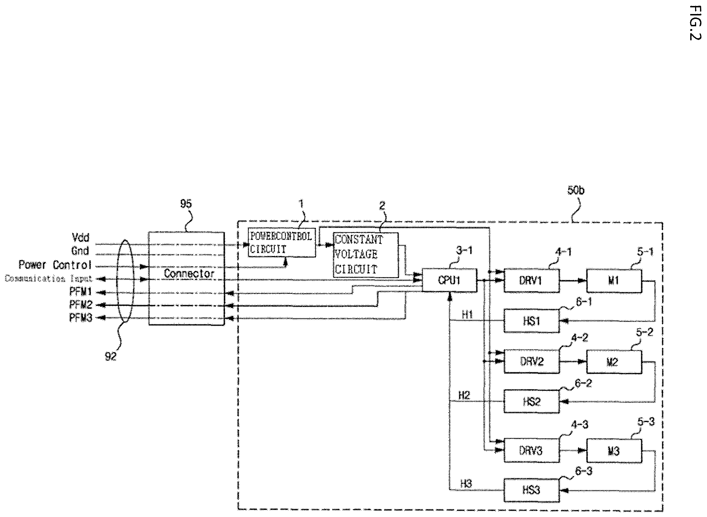

Referring to FIG. 2, the multiple cooling fan control system for a battery pack according to the second embodiment of the present invention includes first to third motors 5-1 to 5- 3 by using only the first control unit 3-1 to control the three cooling fans 22, 24, and 26.

In the multiple cooling fan control system according to the second embodiment, the first to third drivers 4-1 to 4-3 are connected to the first control unit 3-1, and the first to third drivers 4- 1 to 4-3 are connected to the first to third motors 5-1 to 5-3, respectively.

The first control unit 3-1 detects the rotor position signals (H1 to H3) of the respective motors from the first to third Hall sensors 6-1 to 6-3 provided adjacent to the first to third motors 5-1 to 5-3.

The second embodiment of the present invention is similar to the first embodiment except that one control unit 3-1 is used. Therefore, the same elements are given the same reference numerals, and a detailed description thereof will be omitted.

In the second embodiment, the first control unit (CPU1) 3-1 receives duty ratio values via the communication input, as a control signal for controlling the RPMs of the first to third motors (M1 to M3) 5-1 to 5-3 from the battery management system (BMS).

The first control unit (CPU1) 3-1 sequentially receives the duty ratio values for the first to third motors (M1-M3) 5-1 to 5-3 as the communication input and sequentially generates PWM drive signals whose pulse widths are controlled in accordance with the received duty ratio values of the respective motors, to then sequentially apply the PWM drive signals to the first to third drivers (DRV1 to DRV3) 4-1 to 4-3 and detect the current, voltage, temperature, and status information applied to the first to third motors (M1 to M3) 5-1 to 5-3 and transmit the detected current, voltage, temperature, and status information to the battery management system (BMS) via the communication input.

In addition, the first control unit 3-1 calculates the current rotational speeds of the first to third motors (M1 to M3) 5-1 to 5-3 from the rotor position signals (H1-H3) of the respective motors received from the first through third Hall sensors (HS1-HS3) 6-1 to 6-3, and transmits the rotation speed signals (PFM1 to PFM3) of the respective motors to the battery management system (BMS).

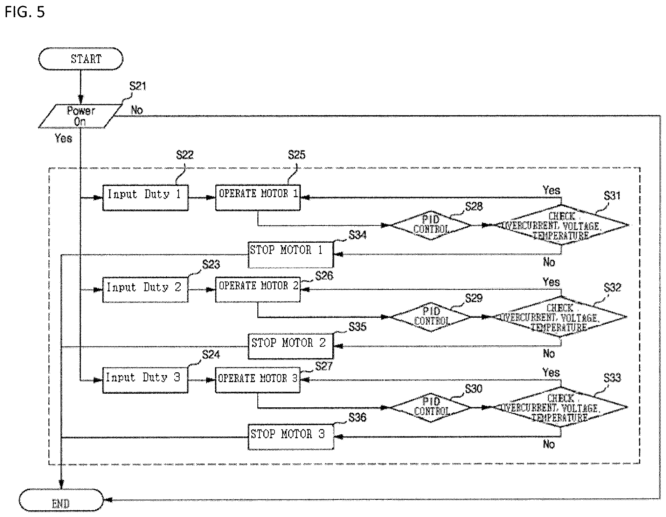

The multiple cooling fan control system for a battery pack according to the second embodiment controls the multiple cooling fans for the battery pack according to the flowchart shown in FIG. 5.

First, when external power sources (Vdd and Gnd) are applied to the control board 50a (S21), a motor drive voltage of DC 12V and a drive voltage of DC 5V are generated from the power control circuit 1 and the constant voltage circuit 2, respectively, to then be applied to the first to third drivers 4-1 to 4-3 and the first control unit 3-1. Accordingly, the first control unit 3-1 and the first to third drivers 4-1 to 4-3 are activated.

Thereafter, the first control unit 3-1 sequentially receives the duty ratio values of the PWM drive signals corresponding to the target RPMs of the three motors from the communication input received from the battery management system (BMS), and generates PWM driving signals based on the received duty ratio values, to drive the first to third motors 5-1 to 5-3 (S22-S24).

In other words, the first control unit 3-1 receives the rotor position signals (H1-H3) of the respective motors received from the first to third Hall sensors (HS1 to HS3) 6-1 to 6-3, and alternately turn on switching transistors included in the first to third drivers 4-1 to 4-3 by referring to the received rotor position signals (H1-H3) of the respective motors, to thereby apply respective PWM driving signals to the stator coils. Accordingly, the first to third drivers 4-1 to 4-3 apply the PWM drive signals to the first to third motors 5-1 to 5-3, respectively, to thereby drive the rotors of the motors, respectively (S25-S27).

Thereafter, the first control unit 3-1 detects RPMs of the first to third motors 5-1 to 5-3 based on the received rotor position signals H1-H3 of the respective motors and transmits the motor rotational speed signals (PFM1 to PFM3) to the battery management system (BMS), and also perform the proportional-integral-derivative (PID) control to reach the target RPMs received from the battery management system (BMS) to thus control the RPMs of the first to third motors 5-1 to 5-3 (S28-S30).

In this case, the first control unit 3-1 detects the overcurrent, the voltage and the temperature flowing in the respective motors and compares them with predetermined reference values (S31-S33). If the detected value is larger than a predetermined reference value, the motor drive is stopped (S34-S36).

Since the first control unit 3-1 is mounted on the control board 50b, in the second embodiment similarly to the first embodiment, the wire harness 92 can be constituted by the four wirings for receiving in common the external power sources (Vdd and Gnd), the power control signal, and the communication input and the three wirings necessary for transmitting the motor rotational speed signals (PFM1 to PFM3) of the respective motors to the battery management system (BMS). The number of wirings of the wire harness 92 can be made to be greatly reduced as compared with the conventional one.

In addition, in the second embodiment, since the first control unit 3-1 is mounted on the control board 50b, only the control signals are received from the battery management system (BMS) and the first to third motors 5-1 to 5- 3 can be independently controlled.

In the second embodiment of the present invention, the first control unit 3-1 and the first to third motors 5-1 to 5-3 for driving the impellers 84 of the three cooling fans 22, 24 and 26, that is, the stators 80 are mounted and fixed directly onto the single control board 50a of increased size. Accordingly, the output terminals of the first to third drivers 4-1 to 4-3 are directly connected to the stator coils 80b of the respective motors. In addition, the first to third Hall sensors 6-1 to 6-3 for detecting the rotor position signals of the respective motors are also directly mounted and fixed onto the single control board 50b.

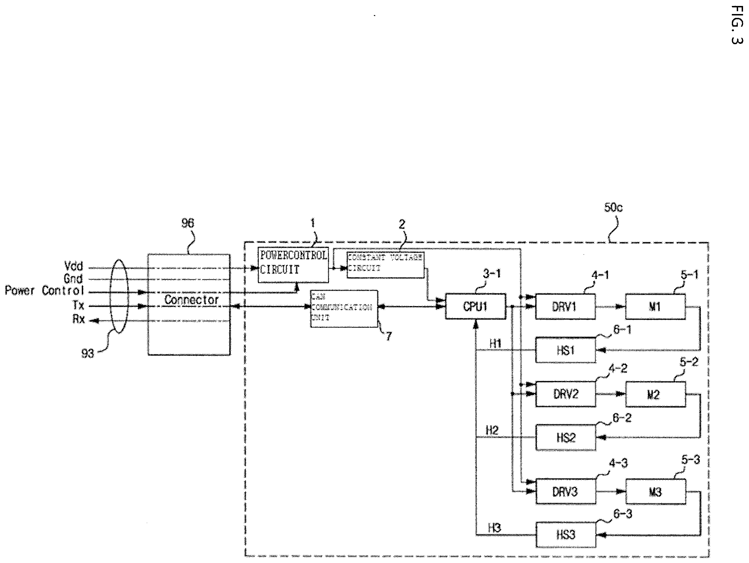

Referring to FIG. 3, the multiple cooling fan control system for a battery pack according to the third embodiment of the present invention employs a method of controlling three cooling fans 22, 24, and 26 by controlling driving of the first to third motors 5-1 to 5-3 by using only the first control unit 3-1in a manner similar to the second embodiment.

The third embodiment is different from the second embodiment in that the information necessary for communication is transmitted and received between the control board 50c and the battery management system (BMS) by using the CAN communication unit 7 as a communication module. Therefore, in the third embodiment, the same components as those in the second embodiment are denoted by the same reference numerals, and a detailed description thereof will be omitted.

The first control unit 3-1 is connected in a network to the battery management system (BMS) via the CAN communication unit 7, the first control unit 3-1 is connected to the first to third drivers 4-1 through 4-3, and the first to third motors 5-1 to 5-3 are connected to the first to third drivers 4-1 to 4-3, respectively.

The first control unit 3-1 detects the rotor position signals H1 to H3 of the respective motors from the first to third Hall sensors 6-1 to 6-3 provided adjacent to the first to third motors 5-1 to 5-3.

The CAN communication unit 7 may be implemented as a CAN communication module that is generally used for controlling the inside of a vehicle.

The CAN communication is used for data transmission and control between an ECU and various information communication systems and entertainment systems constituting nodes inside a vehicle through a CAN data bus made of two data wirings, in which master-slave data communication is performed as a standard communication protocol designed for a microcontroller or devices to communicate with each other, without a separate host computer in a vehicle.

The CAN communication unit 7 performs packet data communication between the control board 50c and the battery management system (BMS) in a CAN communication manner to transmit and receive the communication input including the motor RPMs, the current, voltage, temperature, and status information of each of the motors, and motor rotational speed signals PFM1 to PFM3 of the respective motors.

In the above-described third embodiment, it has been proposed that the CAN communication unit 7 should perform data communication using the CAN communication method. However, it is possible to use a master-slave data communication by local interconnect network (LIN) communication, or universal asynchronous receiver/transmitter (UART).

The first control unit (CPU1) 3-1 receives the motor RPMs required for motor control from the battery management system (BMS) in the CAN communication method via the CAN communication unit 7, and transmits the current, voltage, temperature, and status information of each of the motors and the motor rotation speed signals (PFM1 to PFM3) of the respective motors.

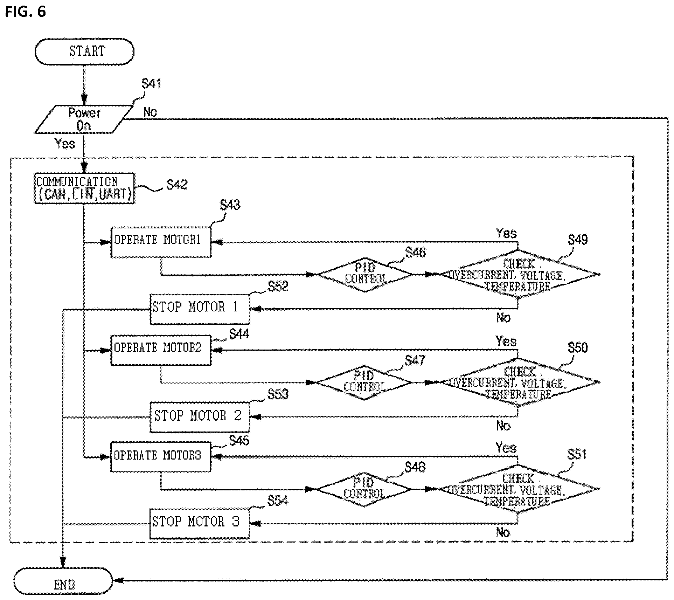

The multiple cooling fan control system for a battery pack according to the third embodiment controls the multiple cooling fans for the battery pack according to the flowchart shown in FIG. 6.

First, when external power sources (Vdd and Gnd) are applied to the control board 50c (S41), a motor drive voltage of DC 12V and a drive voltage of DC 5V are generated from the power control circuit 1 and the constant voltage circuit 2, respectively, to then be applied to the first to third drivers 4-1 to 4-3 and the first control unit 3-1. Accordingly, the first control unit 3-1 and the first to third drivers 4-1 to 4-3 are activated.

Thereafter, the first control unit 3-1 receives the packet data from the battery management system (BMS) via the CAN communication unit 7 and calculates the duty ratio values of the PWM drive signals corresponding to the target RPMs of the three motors contained in the packet data (S42).

Thereafter, the first control unit 3-1 generates the PWM drive signals for driving the first to third motors 5-1 to 5-3 based on the duty ratio values of the PWM drive signals corresponding to the received target RPMs of the three motors.

In other words, the first control unit 3-1 receives the rotor position signals (H1-H3) of the respective motors received from the first to third Hall sensors (HS1 to HS3) 6-1 to 6-3, and alternately turn on switching transistors included in the first to third drivers 4-1 to 4-3 by referring to the received rotor position signals (H1-H3) of the respective motors, to thereby apply respective PWM driving signals to the stator coils. Accordingly, the first to third drivers 4-1 to 4-3 apply the PWM drive signals to the first to third motors 5-1 to 5-3, respectively, to thereby drive the rotors of the motors, respectively (S43-S45).

Thereafter, the first control unit 3-1 performs PID control of each motor to determine the state of the motor so that the first to third motors 5-1 to 5-3 reach the target RPMs (S46-S54) in the same manner as steps S28-S36 in FIG. 5.

Since the first control unit 3-1 is mounted on the control board 50c, in the third embodiment similarly to the second embodiment, the wire harness 93 can be constituted by the three wirings for receiving in common the external power sources (Vdd and Gnd), and the power control signal, and the two wirings necessary for CAN communication with the battery management system (BMS) via the CAN communication unit 7. The number of wirings of the wire harness 93 can be made to be greatly reduced as compared with the conventional one.

In addition, in the third embodiment, since the first control unit 3-1 is mounted on the control board 50c, only the control signals are received from the battery management system (BMS) and the first to third motors 5-1 to 5- 3 can be independently controlled.

The present invention is not limited to controlling three cooling fans and can be applied even when the number of cooling fans is increased or decreased as required.

While the present invention has been particularly shown and described with reference to exemplary embodiments thereof, by way of illustration and example only, and various changes and modifications may be made by those skilled in the art within the protective scope of the invention without departing off the scope of the present invention as defined in the appended claims.

### INDUSTRIAL APPLICABILITY

The present invention can be applied to a multiple cooling fan control system for a battery pack, which is capable of using a wire harness made of a minimum number of wirings by driving a plurality of cooling fans for cooling the battery pack while using a single control board.

## Claims

1. A multiple cooling fan control system for a battery pack, the multiple cooling fan control system comprising:
a housing (10) including a first housing (12) and a second housing (14);
the first housing (12) having a plurality of suction ports (32, 34, 36) arranged at intervals;
a plurality of cooling fans (22, 24, 26) arranged corresponding to the plurality of suction ports (32, 34, 36) on a rear surface of the first housing (12) and generating a ventilation power;
the second housing (14) coupled to the first housing (12) to receive the plurality of cooling fans (22, 24, 26) and having a plurality of discharge ports (40, 42);
a control device installed inside the second housing (14) for controlling the cooling fans (22, 24, 26) and supplying electric power to the cooling fans (22, 24, 26), wherein the control device includes at least one signal processing device for driving the plurality of cooling fans (22, 24, 26) in accordance with motor drive information received from a battery management system (BMS);
a plurality of guide portions (62) having a cochlea structure and collecting air radially discharged by the cooling fans (22, 24, 26) to be integrally formed with the first housing (12) to guide an air flow to one side of the cooling fans (22, 24, 26); and
a plurality of duct portions (66) integrally formed with the second housing (14) to connect between each of the guide portions (62) and each of the discharge ports (40, 42).

2. The multiple cooling fan control system of claim 1, wherein the control device comprises:
a control board (50a, 50b, 50c) installed inside the second housing (14) and having the plurality of cooling fans (22, 24, 26) fixedly installed therein; the at least one signal processing device mounted on the control board (50a, 50b, 50c) and each generating a plurality of drive signals for controlling the plurality of cooling fans (22, 24, 26) in accordance with the motor drive information received from the battery management system (BMS);
a plurality of drivers (4-1, 4-2, 4-3) mounted on the control board (50a, 50b, 50c) and each driving a motor (5-1, 5-2, 5-3) of each of the plurality of cooling fans (22, 24, 26) in accordance with the plurality of drive signals generated from the at least one signal processing device; and
a wire harness (91, 92, 93) for connecting the battery management system (BMS) and the control board (50a, 50b, 50c), and transmitting and receiving a power source for driving the motors (5-1, 5-2, 5-3) of the plurality of cooling fans (22, 24, 26), driving information of the motors (5-1, 5-2, 5-3), and status information of the motors (5-1, 5-2, 5-3),
wherein the power supply for driving the plurality of motors (5-1, 5-2, 5-3) and the drive information of the motors (5-1, 5-2, 5-3) are commonly received through the wire harness (91, 92, 93).

3. The multiple cooling fan control system of claim 2, further comprising:
a communication module which is provided between the wire harness (91, 92, 93) and the at least one signal processing device to receive the driving information of the motors (5-1, 5-2, 5-3) and transmit the status information of the motors (5-1, 5-2, 5-3), wherein the wire harness (91, 92, 93) comprises three wires for commonly receiving an external power supply and a power control signal, and two wires for the communication module.

4. The multiple cooling fan control system of claim 3, wherein the communication module employs any one of a controller area network (CAN) communication system, a local interconnect network (LIN) communication system, and a universal asynchronous receiver/transmitter (UART) communication system.

5. The multiple cooling fan control system of claim 2, wherein each of the cooling fans (22, 24, 26) comprises:
a motor (5-1, 5-2, 5-3) in which a stator (80) and a rotor (82) are formed in a radial gap type; and
impellers (84) which rotate together with the rotor (82) and suck air in an axial direction of the suction ports (32, 34, 36) to discharge air in a radial direction thereof,
wherein the motor (5-1, 5-2, 5-3) comprises:
a bearing bushing (72) having a throughhole formed at a central portion of the bearing bushing (72) and whose one end is fixed to the control board (50a, 50b, 50c);
the stator (80) whose inner circumferential portion is fixed to the outer circumferential portion of the bearing bushing (72);
a pair of sleeve bearings (86, 88) spaced apart from each other in the throughhole of the bearing bushing (72);
a rotating shaft (74) rotatably supported by the pair of sleeve bearings (86, 88); and
the rotor (82) disposed at an outer circumferential portion of the stator (80) with an air gap therebetween, the rotor (82) having the rotating shaft (74) coupled to a central portion of a rotor support body (85) and impellers (84) coupled to an outer circumferential portion of the rotor (82).

6. The multiple cooling fan control system of claim 2 or 5, wherein the control board (50a, 50b, 50c) comprises:
a main body (54) that is disposed on a rear surface of the first housing (12) in which the suction ports (32, 34, 36) are installed, and the at least one signal processing device and the drivers are disposed; and a plurality of connection portions (51, 52, 53) protruding from the main body (54) toward a rear portion of the suction ports (32, 34, 36) and to which the bearing bushing (72) is fixed wherein the motor (5-1, 5-2, 5-3) is supported to the bearing bushing (72).

7. The multiple cooling fan control system of claim 2, wherein the at least one signal processing device receives the duty ratio value required for the RPM control of the motor (5-1, 5-2, 5-3) from the battery management system (BMS) through a communication input of the wire harness (91, 92, 93), and outputs the current, voltage, temperature, and state information of the motor (5-1, 5-2, 5-3) to the battery management system (BMS).

8. The multiple cooling fan control system of claim 2, wherein the at least one signal processing device calculates a current rotational speed of the motor (5-1, 5-2, 5-3) from a rotor position signals of the motor (5-1, 5-2, 5-3) received from a hall sensor (6-1, 6-2, 6-3) provided adjacent to the motor (5-1, 5-2, 5-3) and transmits the rotational speed signal of the motor (5-1, 5-2, 5-3) to the battery management system (BMS).

9. A multiple cooling fan control system for a battery pack, the multiple cooling fan control system comprising:
a housing (10) having a plurality of suction ports (32, 34, 36) and a plurality of discharge ports (40, 42) on one side and the other side of the housing (10), respectively;
a plurality of cooling fans (22, 24, 26) having a plurality of impellers (84) and motors (5-1, 5-2, 5-3) installed in the housing (10) in correspondence to the plurality of suction ports (32, 34, 36);
a plurality of guide portions (62) having a cochlea structure and collecting air radially discharged by the cooling fans (22, 24, 26) to be integrally formed with the housing (10) to guide an air flow to one side of the cooling fans (22, 24, 26);
a plurality of duct portions (66) integrally formed with the housing (10) to connect between each of the guide portions (62) and each of the discharge ports (40, 42); and
a control device for controlling driving of the plurality of cooling fans (22, 24, 26) to cool the battery pack, wherein the control device comprises:
a control board (50a, 50b, 50c) installed inside the housing (10) and having the plurality of cooling fans (22, 24, 26) fixedly installed therein;
at least one signal processing device mounted on the control board (50a, 50b, 50c) and each generating a plurality of drive signals for controlling the plurality of cooling fans (22, 24, 26) in accordance with motor drive information received from a battery management system (BMS);
a plurality of drivers mounted on the control board (50a, 50b, 50c) and each driving a motor (5-1, 5-2, 5-3) of each of the plurality of cooling fans (22, 24, 26) in accordance with the plurality of drive signals generated from the at least one signal processing device; and
a wire harness (91, 92, 93) for connecting the battery management system (BMS) and the control board (50a, 50b, 50c), and transmitting and receiving a power source for driving the motors (5-1, 5-2, 5-3) of the plurality of cooling fans (22, 24, 26), driving information of the motors (5-1, 5-2, 5-3), and status information of the motors (5-1, 5-2, 5-3), wherein the power supply for driving the motors (5-1, 5-2, 5-3) of the plurality of cooling fans (22, 24, 26) and the drive information of the motors (5-1, 5-2, 5-3) are commonly received through the wire harness (91, 92, 93).

10. The multiple cooling fan control system of claim 9, wherein the motor (5-1, 5-2, 5-3) comprises:
a bearing bushing (72) having a throughhole formed at a central portion of the bearing bushing (72) and whose one end is fixed to the control board (50a, 50b, 50c);
a stator (80) whose inner circumferential portion is fixed to the outer circumferential portion of the bearing bushing (72);
a pair of sleeve bearings (86, 88) spaced apart from each other in the throughhole of the bearing bushing (72);
a rotating shaft (74) rotatably supported by the pair of sleeve bearings (86, 88); and
a rotor (82) disposed at an outer circumferential portion of the stator (80) with an air gap therebetween, the rotor (82) having the rotating shaft (74) coupled to a central portion of a rotor support body (85) and impellers (84) coupled to an outer circumferential portion of the rotor (82).

11. The multiple cooling fan control system of claim 9, wherein the at least one signal processing device controls the RPM of each motor (5-1, 5-2, 5-3) by performing a proportional-integral-derivative (PID) control to reach a target RPM received from the battery management system (BMS), and detects the overcurrent, voltage, and temperature of each motor (5-1, 5-2, 5-3) and compare the detected overcurrent, voltage, and temperature with predetermined reference values, to thus stop the motor drive when the detected values are larger than predetermined reference values.

12. The multiple cooling fan control system of claim 9, wherein the at least one signal processing device limits the drive output with respect to a motor (5-1, 5-2, 5-3) in which an abnormality occurs when an abnormality occurs in one of the plurality of motors (5-1, 5-2, 5-3), and drives the rest of the motors (5-1, 5-2, 5-3) beyond the normal drive, to thereby control to obtain the same air volume as before the occurrence of the abnormality.

13. The multiple cooling fan control system of claim 9, wherein the at least one signal processing device comprises a plurality of signal processing devices corresponding to a plurality of drivers, and the plurality of signal processing devices receive drive information of motors (5-1, 5-2, 5-3) including a target RPM from the battery management system (BMS) in common, to thereby independently control a plurality of the motors (5-1, 5-2, 5-3).

## Patentansprüche

1. Mehrfachkühlungsventilatorensteuersystem für einen Batteriepack, wobei das Mehrfachkühlungsventilatorensteuersystem umfasst:
ein Gehäuse (10), das ein erstes Gehäuse (12) und ein zweites Gehäuse (14) umfasst:
wobei das erste Gehäuse (12) eine Vielzahl von Ansaugöffnungen (32, 34, 36) aufweist, die in Intervallen angeordnet sind;
eine Vielzahl von Kühlungsventilatoren (22, 24, 26), die an einer hinteren Oberfläche des ersten Gehäuses (12) entsprechend der Vielzahl von Ansaugöffnungen (32, 34, 36) angeordnet sind und eine Ventilationsleistung erzeugen;
wobei das zweite Gehäuse (14) mit dem ersten Gehäuse (12) gekoppelt ist, um die Vielzahl von Kühlungsventilatoren (22, 24, 26) aufzunehmen und eine Vielzahl von Auslassöffnungen (40, 42) aufweist;
eine Steuervorrichtung, die in dem zweiten Gehäuse (14) installiert ist, um die Kühlungsventilatoren (22, 24, 26) zu steuern und den Kühlungsventilatoren (22, 24, 26) elektrische Leistung zuzuführen, wobei die Steuervorrichtung wenigstens eine Signalverarbeitungsvorrichtung zum Antreiben der Vielzahl von Kühlungsventilatoren (22, 24, 26) gemäß Motorantriebsinformationen aufweist, die von einem Batteriemanagementsystem (BMS) empfangen werden;
eine Vielzahl von Führungsabschnitten (62), die eine Cochlea-Struktur aufweisen und Luft sammeln, die von den Kühlungsventilatoren (22, 24, 26) radial abgeführt wird, die integral mit dem ersten Gehäuse (12) ausgebildet sind, um einen Luftstrom zu einer Seite der Kühlungsventilatoren (22, 24, 26) zu führen; und
eine Vielzahl von Kanalabschnitten (66), die einstückig mit dem zweiten Gehäuse (14) ausgebildet sind, um zwischen jedem der Führungsabschnitte (62) und jeder der Auslassöffnungen (40, 42) eine Verbindung herzustellen.

2. Mehrfachkühlungsventilatorensteuersystem nach Anspruch 1, wobei die Steuervorrichtung umfasst:
eine Steuerplatine (50a, 50b, 50c), die im Inneren des zweiten Gehäuses (14) installiert ist und in der die Vielzahl von Kühlungsventilatoren (22, 24, 26) fest installiert sind; wobei die wenigstens eine Signalverarbeitungsvorrichtung auf der Steuerplatine (50a, 50b, 50c) montiert ist und jede eine Vielzahl von Antriebssignalen zum Steuern der Vielzahl von Kühlungsventilatoren (22, 24, 26) gemäß den vom Batteriemanagementsystem (BMS) empfangenen Motorantriebsinformationen erzeugt;
eine Vielzahl von Treibern (4-1, 4-2, 4-3), die auf der Steuerplatine (50a, 50b, 50c) montiert sind und jeweils einen Motor (5-1, 5-2, 5-3) von jedem der Vielzahl von Kühlungsventilatoren (22, 24, 26) gemäß der Vielzahl von Antriebssignalen antreiben, die von der wenigstens einen Signalverarbeitungsvorrichtung erzeugt werden; und
einen Kabelbaum (91, 92, 93) zum Verbinden des Batteriemanagementsystems (BMS) und der Steuerplatine (50a, 50b, 50c) und zum Übertragen und Empfangen einer Energiequelle zum Antreiben der Motoren (5-1, 5-2, 5-3) der Vielzahl von Kühlungsventilatoren (22, 24, 26), von Antriebsinformationen der Motoren (5-1, 5-2, 5-3) und von Statusinformationen der Motoren (5-1, 5-2, 5-3),
wobei die Leistungszufuhr zum Antreiben der Vielzahl von Motoren (5-1, 5-2, 5-3) und die Antriebsinformationen der Motoren (5-1, 5-2, 5-3) gemeinsam über den Kabelbaum (91, 92, 93) empfangen werden.

3. Mehrfachkühlungsventilatorensteuersystem nach Anspruch 2, ferner umfassend:
ein Kommunikationsmodul, das zwischen dem Kabelbaum (91, 92, 93) und der wenigstens einen Signalverarbeitungsvorrichtung vorgesehen ist, um die Antriebsinformationen der Motoren (5-1, 5-2, 5-3) zu empfangen und die Statusinformationen der Motoren (5-1, 5-2, 5-3) zu übertragen, wobei der Kabelbaum (91, 92, 93) drei Kabel zum gemeinsamen Empfangen einer externen Leistungszüfuhr und eines Leistungssteuersignals und zwei Kabel für das Kommunikationsmodul umfasst.

4. Mehrfachkühlungsventilatorensteuersystem nach Anspruch 3, wobei das Kommunikationsmodul ein Kommunikationssystem eines Controller Area Network (CAN), ein Kommunikationssystem eines Local Interconnect Network (LIN) oder ein Kommunikationssystem eines Universal Asynchronous Receiver/Transmitter (UART) verwendet.

5. Mehrfachkühlungsventilatorensteuersystem nach Anspruch 2, wobei jeder der Kühlungsventilatoren (22, 24, 26) umfasst:
einen Motor (5-1, 5-2, 5-3), in dem ein Stator (80) und ein Rotor (82) in einer Radialspaltbauweise ausgebildet sind; und
Impeller (84), die sich zusammen mit dem Rotor (82) drehen und Luft in einer axialen Richtung der Ansaugöffnungen (32, 34, 36) ansaugen, um Luft in einer radialen Richtung davon abzugeben,
wobei der Motor (5-1, 5-2, 5-3) umfasst:
eine Lagerbuchse (72) mit einem Durchgangsloch, das an einem zentralen Abschnitt der Lagerbuchse (72) ausgebildet ist und dessen eines Ende an der Steuerplatine (50a, 50b, 50c) befestigt ist;
den Stator (80), dessen innerer Umfangsabschnitt an dem äußeren Umfangsabschnitt der Lagerbuchse (72) befestigt ist;
ein Paar von Gleitlagern (86, 88), die im Durchgangsloch der Lagerbuchse (72) voneinander beabstandet sind;
eine Drehwelle (74), die drehbar durch das Paar von Gleitlagern (86, 88) gelagert ist;
und
den Rotor (82), der an einem Außenumfangsabschnitt des Stators (80) mit einem Luftspalt dazwischen angeordnet ist, wobei der Rotor (82) die Drehwelle (74) mit einem Mittelabschnitt eines Rotorträgerkörpers (85) koppelt, und Impeller (84) mit einem Außenumfangsabschnitt des Rotors (82) koppelt.

6. Mehrfachkühlungsventilatorensteuersystem nach Anspruch 2 oder 5, wobei die Steuerplatine (50a, 50b, 50c) umfasst:
einen Hauptkörper (54), der an einer hinteren Oberfläche des ersten Gehäuses (12) angeordnet ist, in dem die Ansaugöffnungen (32, 34, 36) installiert sind und die wenigstens eine Signalverarbeitungsvorrichtung und die Treiber angeordnet sind; und
eine Vielzahl von Verbindungsabschnitten (51, 52, 53), die von dem Hauptkörper (54) in Richtung eines hinteren Abschnitts der Ansaugöffnungen (32, 34, 36) vorstehen und an denen die Lagerbuchse (72) befestigt ist, wobei der Motor (5-1, 5-2, 5-3) von der Lagerbuchse (72) gelagert ist.

7. Mehrfachkühlungsventilatorensteuersystem nach Anspruch 2, wobei die wenigstens eine Signalverarbeitungsvorrichtung den für die Drehzahlregelung des Motors (5-1, 5-2, 5-3) erforderlichen Tastverhältniswert von dem Batteriemanagementsystem (BMS) über einen Kommunikationseingang des Kabelbaums (91, 92, 93) empfängt und Informationen zu Strom, Spannung, Temperatur und Zustand des Motors (5-1, 5-2, 5-3) an das Batteriemanagementsystem (BMS) ausgibt.

8. Mehrfachkühlungsventilatorensteuersystem nach Anspruch 2, wobei die wenigstens eine Signalverarbeitungsvorrichtung eine aktuelle Drehzahl des Motors (5-1, 5-2, 5-3) aus Rotorpositionssignalen des Motors (5-1, 5-2, 5-3) berechnet, die von einem Hallsensor (6-1, 6-2, 6-3) empfangen werden, der angrenzend an den Motor (5-1, 5-2, 5-3) vorgesehen ist, und das Drehzahlsignal des Motors (5-1, 5-2, 5-3) zum Batteriemanagementsystem (BMS) überträgt.

9. Mehrfachkühlungsventilatorensteuersystem für einen Batteriepack, wobei das Mehrfachkühlungsventilatorensteuersystem umfasst:
ein Gehäuse (10) mit einer Vielzahl von Ansaugöffnungen (32, 34, 36) und einer Vielzahl von Auslassöffnungen (40, 42) auf einer Seite bzw. der anderen Seite des Gehäuses (10);
eine Vielzahl von Kühlungsventilatoren (22, 24, 26) mit einer Vielzahl von Impellern (84) und Motoren (5-1, 5-2, 5-3), die in dem Gehäuse (10) entsprechend der Vielzahl von Ansaugöffnungen (32, 34, 36) installiert sind;
eine Vielzahl von Führungsabschnitten (62), die eine Cochlea-Struktur aufweisen und Luft sammeln, die von den Kühlungsventilatoren (22, 24, 26) radial abgeführt wird, die integral mit dem Gehäuse (10) ausgebildet sind, um einen Luftstrom zu einer Seite der Kühlungsventilatoren (22, 24, 26) zu führen; und
eine Vielzahl von Kanalabschnitten (66), die einstückig mit dem Gehäuse (10) ausgebildet sind, um zwischen jedem der Führungsabschnitte (62) und jeder der Auslassöffnungen (40, 42) eine Verbindung herzustellen; und
eine Steuervorrichtung zum Steuern des Antriebs der Vielzahl von Kühlungsventilatoren (22, 24, 26) zum Kühlen des Batteriepacks, wobei die Steuervorrichtung umfasst:
eine Steuerplatine (50a, 50b, 50c), die im Inneren des Gehäuses (10) installiert ist und in der die Vielzahl von Kühlungsventilatoren (22, 24, 26) fest installiert ist;
wenigstens eine Signalverarbeitungsvorrichtung, die auf der Steuerplatine (50a, 50b, 50c) montiert ist und jeweils eine Vielzahl von Antriebssignalen zum Steuern der Vielzahl von Kühlungsventilatoren (22, 24, 26) gemäß Motorantriebsinformationen erzeugt, die von einem Batteriemanagementsystem (BMS) empfangen werden;
eine Vielzahl von Treibern, die auf der Steuerplatine (50a, 50b, 50c) montiert sind und jeweils einen Motor (5-1, 5-2, 5-3) von jedem der Vielzahl von Kühlungsventilatoren (22, 24, 26) gemäß der Vielzahl von Antriebssignalen antreiben, die von der wenigstens einen Signalverarbeitungsvorrichtung erzeugt werden; und
einen Kabelbaum (91, 92, 93) zum Verbinden des Batteriemanagementsystems (BMS) und der Steuerplatine (50a, 50b, 50c) und zum Übertragen und Empfangen einer Leistungsquelle zum Antreiben der Motoren (5-1, 5-2, 5-3) der Vielzahl von Kühlungsventilatoren (22, 24, 26), von Antriebsinformationen der Motoren (5-1, 5-2, 5-3) und von Statusinformationen der Motoren (5-1, 5-2, 5-3), wobei die Leistungszufuhr zum Antreiben der Motoren (5-1, 5-2, 5-3) für die Vielzahl von Kühlungsventilatoren (22, 24, 26) und die Antriebsinformationen der Motoren (5-1, 5-2, 5-3) gemeinsam über den Kabelbaum (91, 92, 93) empfangen werden.

10. Mehrfachkühlungsventilatorensteuersystem nach Anspruch 9, wobei der Motor (5-1, 5-2, 5-3) umfasst:
eine Lagerbuchse (72) mit einem Durchgangsloch, das an einem zentralen Abschnitt der Lagerbuchse (72) ausgebildet ist und dessen eines Ende an der Steuerplatine (50a, 50b, 50c) befestigt ist;
einen Stator (80), dessen innerer Umfangsabschnitt an dem äußeren Umfangsabschnitt der Lagerbuchse (72) befestigt ist;
ein Paar von Gleitlagern (86, 88), die im Durchgangsloch der Lagerbuchse (72) voneinander beabstandet sind;
eine Drehwelle (74), die drehbar durch das Paar von Gleitlagern (86, 88) gelagert ist;
und
einen Rotor (82), der an einem Außenumfangsabschnitt des Stators (80) mit einem Luftspalt dazwischen angeordnet ist, wobei der Rotor (82) eine Drehwelle (74), die mit einem Mittelabschnitt eines Rotorträgerkörpers (85) gekoppelt ist, und Impeller (84) aufweist, die mit einem Außenumfangsabschnitt des Rotors (82) gekoppelt sind.

11. Mehrfachkühlungsventilatorensteuersystem nach Anspruch 9, wobei die wenigstens eine Signalverarbeitungsvorrichtung die Drehzahl jedes Motors (5-1, 5-2, 5-3) durch Ausführen einer Proportional-Integral-Differential-Regelung (PID-Regelung) steuert, um eine vom Batteriemanagementsystem (BMS) empfangene Solldrehzahl zu erreichen, und den Überstrom, die Spannung und die Temperatur jedes Motors (5-1, 5-2, 5-3) erfasst und den erfassten Überstrom, die Spannung und die Temperatur mit vorbestimmten Referenzwerten vergleicht, um somit den Motorantrieb zu stoppen, wenn die erfassten Werte größer als vorbestimmte Referenzwerte sind.

12. Mehrfachkühlungsventilatorensteuersystem nach Anspruch 9, wobei die wenigstens eine Signalverarbeitungsvorrichtung die Antriebsleistung in Bezug auf einen Motor (5-1, 5-2, 5-3) begrenzt, in dem eine Abnormalität auftritt, wenn eine Abnormalität in einem der Vielzahl von Motoren (5-1, 5-2, 5-3) auftritt, und den Rest der Motoren (5-1, 5-2, 5-3) über den normalen Antrieb hinaus antreibt, um dadurch derart zu steuern, dass das gleiche Luftvolumen wie vor dem Auftreten der Abnormalität erhalten wird.

13. Mehrfachkühlungsventilatorensteuersystem nach Anspruch 9, wobei die wenigstens eine Signalverarbeitungsvorrichtung eine Vielzahl von Signalverarbeitungsvorrichtungen aufweist, die einer Vielzahl von Treibern entsprechen, und die Vielzahl von Signalverarbeitungsvorrichtungen gemeinsam Antriebsinformationen von Motoren (5-1, 5-2, 5-3) empfangen, die eine Solldrehzahl von dem Batteriemanagementsystem (BMS) umfassen, um dadurch eine Vielzahl von Motoren (5-1, 5-2, 5-3) unabhängig voneinander zu steuern.

## Revendications

1. Système de commande de plusieurs ventilateurs de refroidissement pour un bloc batterie, le système de commande de plusieurs ventilateurs de refroidissement comprenant:
un carter (10) qui inclut un premier carter (12) et un second carter (14);
le premier carter (12) comprenant une pluralité d'orifices d'aspiration (32, 34, 36) qui sont agencés selon des intervalles;
une pluralité de ventilateurs de refroidissement (22, 24, 26) qui sont agencés en correspondance avec la pluralité d'orifices d'aspiration (32, 34, 36) sur une surface arrière du premier carter (12) et qui génèrent une puissance de ventilation;
le second carter (14) qui est couplé au premier carter (12) pour recevoir la pluralité de ventilateurs de refroidissement (22, 24, 26) et qui comporte une pluralité d'orifices de décharge (40, 42);
un dispositif de commande qui est installé à l'intérieur du second carter (14) pour commander les ventilateurs de refroidissement (22, 24, 26) et pour alimenter de l'énergie électrique sur les ventilateurs de refroidissement (22, 24, 26), dans lequel le dispositif de commande inclut au moins un dispositif de traitement de signal pour entraîner la pluralité de ventilateurs de refroidissement (22, 24, 26) conformément à une information d'entraînement de moteur qui est reçue depuis un système de gestion de batterie (BMS);
une pluralité de sections de guidage (62) qui présentent une structure cochléaire et qui collectent l'air qui est déchargé radialement par les ventilateurs de refroidissement (22, 24, 26), lesquelles sections doivent être formées d'un seul tenant avec le premier carter (12) pour guider un écoulement d'air jusqu'à un côté des ventilateurs de refroidissement (22, 24, 26); et
une pluralité de sections de conduit (66) qui sont formées d'un seul tenant avec le second carter (14) pour assurer une connexion entre chacune des sections de guidage (62) et chacun des orifices de décharge (40, 42).

2. Système de commande de plusieurs ventilateurs de refroidissement selon la revendication 1, dans lequel le dispositif de commande comprend:
une carte de commande (50a, 50b, 50c) qui est installée à l'intérieur du second carter (14) et qui comporte la pluralité de ventilateurs de refroidissement (22, 24, 26) qui sont installés de façon fixe à l'intérieur; l'au moins un dispositif de traitement de signal qui est monté sur la carte de commande (50a, 50b, 50c) et dont chacun génère une pluralité de signaux d'entraînement pour commander la pluralité de ventilateurs de refroidissement (22, 24, 26) conformément à l'information d'entraînement de moteur qui est reçue depuis le système de gestion de batterie (BMS);
une pluralité de moyens d'entraînement (4-1, 4-2, 4-3) qui sont montés sur la carte de commande (50a, 50b, 50c) et dont chacun entraîne un moteur (5-1, 5-2, 5-3) de chacun de la pluralité de ventilateurs de refroidissement (22, 24, 26) conformément à la pluralité de signaux d'entraînement qui sont générés depuis l'au moins un dispositif de traitement de signal; et
un faisceau de câbles électriques (91, 92, 93) pour connecter le système de gestion de batterie (BMS) et la carte de commande (50a, 50b 50c), ainsi que pour émettre et recevoir une source d'énergie électrique pour entraîner les moteurs (5-1, 5-2, 5-3) de la pluralité de ventilateurs de refroidissement (22, 24, 26), une information d'entraînement des moteurs (5-1, 5-2, 5-3) et une information d'état des moteurs (5-1, 5-2, 5-3); dans lequel:
l'alimentation électrique pour entraîner la pluralité de moteurs (5-1, 5-2, 5-3) et l'information d'entraînement des moteurs (5-1, 5-2, 5-3) sont reçues de façon commune par l'intermédiaire et au travers du faisceau de câblés électriques (91, 92, 93).

3. Système de commande de plusieurs ventilateurs de refroidissement selon la revendication 2, comprenant en outre:
un module de communication qui est prévu entre le faisceau de câbles électriques (91, 92, 93) et l'au moins un dispositif de traitement de signal pour recevoir l'information d'entraînement des moteurs (5-1, 5-2, 5-3) et pour émettre l'information d'état des moteurs (5-1, 5-2, 5-3), dans lequel le faisceau de câbles électriques (91, 92, 93) comprend trois câbles pour recevoir de façon commune une alimentation électrique externe et un signal de commande d'alimentation, et deux câbles pour le module de communication.

4. Système de commande de plusieurs ventilateurs de refroidissement selon la revendication 3, dans lequel le module de communication utilise n'importe quel système de communication pris parmi un système de communication par réseau de zone de contrôleur (CAN), un système de communication par réseau d'interconnexion local (LIN) et un système de communication par récepteurs/émetteurs asynchrones universels (UART).

5. Système de commande de plusieurs ventilateurs de refroidissement selon la revendication 2, dans lequel chacun des ventilateurs de refroidissement (22, 24, 26) comprend:
un moteur (5-1, 5-2, 5-3) dans lequel un stator (80) et un rotor (82) sont formés selon un type à entrefer radial; et
des moyens de propulsion (84) qui sont entraînés en rotation en association avec le rotor (82) et qui aspirent l'air dans une direction axiale des orifices d'aspiration (32, 34, 36) pour décharger l'air dans leur direction radiale; dans lequel:
le moteur (5-1, 5-2, 5-3) comprend:
un coussinet de palier (72) qui comporte un trou débouchant qui est formé au niveau d'une section centrale du coussinet de palier (72) et dont une extrémité est fixée sur la carte de commande (50a, 50b, 50c);
le stator (80) dont une section circonférentielle interne est fixée sur la section circonférentielle externe du coussinet de palier (72);
une paire de paliers à douille (86, 88) qui sont espacés l'un de l'autre à l'intérieur du trou débouchant du coussinet de palier (72);
un arbre rotatif (74) qui est supporté à rotation par la paire de paliers à douille (86, 88); et
le rotor (82) qui est disposé au niveau d'une section circonférentielle externe du stator (80) en étant séparé par un entrefer, le rotor (82) comportant l'arbre rotatif (74) qui est couplé à une section centrale d'un corps de support de rotor (85) et des moyens de propulsion (84) qui sont couplés à une section circonférentielle externe du rotor (82).

6. Système de commande de plusieurs ventilateurs de refroidissement selon la revendication 2 ou 5, dans lequel la carte de commande (50a, 50b, 50c) comprend:
un corps principal (54) qui est disposé sur une surface arrière du premier carter (12) dans lequel les orifices d'aspiration (32, 34, 36) sont installés, et dans lequel l'au moins un dispositif de traitement de signal et les moyens d'entraînement sont disposés; et
une pluralité de sections de connexion (51, 52, 53) qui font saillie depuis le corps principal (54) en direction d'une section arrière des orifices d'aspiration (32, 34, 36) et sur lesquelles le coussinet de palier (72) est fixé, dans lequel le moteur (5-1, 5-2, 5-3) est supporté sur le coussinet de palier (72).

7. Système de commande de plusieurs ventilateurs de refroidissement selon la revendication 2, dans lequel l'au moins un dispositif de traitement de signal reçoit la valeur de rapport cyclique qui est requise pour la commande du régime moteur exprimé en nombre de tours par minute RPM du moteur (5-1, 5-2, 5-3) depuis le système de gestion de batterie (BMS) par l'intermédiaire et au travers d'une entrée de communication du faisceau de câbles électriques (91, 92, 93) et il émet en sortie le courant, la tension, la température et l'information d'état du moteur (5-1, 5-2, 5-3) à destination du système de gestion de batterie (BMS).

8. Système de commande de plusieurs ventilateurs de refroidissement selon la revendication 2, dans lequel l'au moins un dispositif de traitement de signal calcule une vitesse de rotation courante du moteur (5-1, 5-2, 5-3) à partir d'un signal de position de rotor du moteur (5-1, 5-2, 5-3) qui est reçu depuis un capteur à effet hall (6-1, 6-2, 6-3) qui est prévu de sorte qu'il soit adjacent au moteur (5-1, 5-2, 5-3) et il émet le signal de vitesse de rotation du moteur (5-1, 5-2, 5-3) sur le système de gestion de batterie (BMS).

9. Système de commande de plusieurs ventilateurs de refroidissement pour un bloc batterie, le système de commande de plusieurs ventilateurs de refroidissement comprenant:
un carter (10) qui comporte une pluralité d'orifices d'aspiration (32, 34, 36) et une pluralité d'orifices de décharge (40, 42) respectivement sur un côté et sur l'autre côté du carter (10);
une pluralité de ventilateurs de refroidissement (22, 24, 26) qui comportent une pluralité de moyens de propulsion (84) et de moteurs (5-1, 5-2, 5-3) qui sont installés dans le carter (10) en correspondance avec la pluralité d'orifices d'aspiration (32, 34, 36);
une pluralité de sections de guidage (62) qui présentent une structure cochléaire et qui collectent l'air qui est déchargé radialement par les ventilateurs de refroidissement (22, 24, 26), lesquelles sections doivent être formées d'un seul tenant avec le carter (10) pour guider un écoulement d'air jusqu'à un côté des ventilateurs de refroidissement (22, 24, 26);
une pluralité de sections de conduit (66) qui sont formées d'un seul tenant avec le carter (10) pour assurer une connexion entre chacune des sections de guidage (62) et chacun des orifices de décharge (40, 42); et
un dispositif de commande pour commander l'entraînement de la pluralité de ventilateurs de refroidissement (22, 24, 26) pour refroidir le bloc batterie, dans lequel le dispositif de commande comprend:
une carte de commande (50a, 50b, 50c) qui est installée à l'intérieur du carter (10) et qui comporte la pluralité de ventilateurs de refroidissement (22, 24, 26) qui sont installés de façon fixe à l'intérieur;
au moins un dispositif de traitement de signal qui est monté sur la carte de commande (50a, 50b, 50c) et dont chacun génère une pluralité de signaux d'entraînement pour commander la pluralité de ventilateurs de refroidissement (22, 24, 26) conformément à une information d'entraînement de moteur qui est reçue depuis un système de gestion de batterie (BMS);
une pluralité de moyens d'entraînement qui sont montés sur la carte de commande (50a, 50b, 50c) et dont chacun entraîne un moteur (5-1, 5-2, 5-3) de chacun de la pluralité de ventilateurs de refroidissement (22, 24, 26) conformément à la pluralité de signaux d'entraînement qui sont générés depuis l'au moins un dispositif de traitement de signal; et
un faisceau de câbles électriques (91, 92, 93) pour connecter le système de gestion de batterie (BMS) et la carte de commande (50a, 50b, 50c), ainsi que pour émettre et recevoir une source d'énergie électrique pour entraîner les moteurs (5-1, 5-2, 5-3) de la pluralité de ventilateurs de refroidissement (22, 24, 26), une information d'entraînement des moteurs (5-1, 5-2, 5-3) et une information d'état des moteurs (5-1, 5-2, 5-3), dans lequel l'alimentation électrique pour entraîner les moteurs (5-1, 5-2, 5-3) de la pluralité de ventilateurs de refroidissement (22, 24, 26) et l'information d'entraînement des moteurs (5-1, 5-2, 5-3) sont reçues de façon commune par l'intermédiaire et au travers du faisceau de câbles électriques (91, 92, 93).

10. Système de commande de plusieurs ventilateurs de refroidissement selon la revendication 9, dans lequel le moteur (5-1, 5-2, 5-3) comprend:
un coussinet de palier (72) qui comporte un trou débouchant qui est formé au niveau d'une section centrale du coussinet de palier (72) et dont une extrémité est fixée sur la carte de commande (50a, 50b, 50c);
un stator (80) dont une section circonférentielle interne est fixée sur la section circonférentielle externe du coussinet de palier (72);
une paire de paliers à douille (86, 88) qui sont espacés l'un de l'autre à l'intérieur du trou débouchant du coussinet de palier (72);
un arbre rotatif (74) qui est supporté à rotation par la paire de paliers à douille (86, 88); et
un rotor (82) qui est disposé au niveau d'une section circonférentielle externe du stator (80) en étant séparé par un entrefer, le rotor (82) comportant l'arbre rotatif (74) qui est couplé à une section centrale d'un corps de support de rotor (85) et des moyens de propulsion (84) qui sont couplés à une section circonférentielle externe du rotor (82).

11. Système de commande de plusieurs ventilateurs de refroidissement selon la revendication 9, dans lequel l'au moins un dispositif de traitement de signal commande le régime moteur exprimé en nombre de tours par minute RPM de chaque moteur (5-1, 5-2, 5-3) en réalisant une commande de proportionnalité - d'intégration - de dérivation (PID) pour atteindre un RPM cible qui est reçu depuis le système de gestion de batterie (BMS), et il détecte la surintensité, la tension et la température de chaque moteur (5-1, 5-2, 5-3) et il compare la surintensité, la tension et la température détectées à des valeurs de référence prédéterminées, pour arrêter en conséquence l'entraînement du moteur lorsque les valeurs détectées sont supérieures aux valeurs de référence prédéterminées.

12. Système de commande de plusieurs ventilateurs de refroidissement selon la revendication 9, dans lequel l'au moins un dispositif de traitement de signal limite la sortie d'entraînement par rapport à un moteur (5-1, 5-2, 5-3) dans lequel une anomalie survient lorsqu'une anomalie survient dans l'un de la pluralité de moteurs 5-1, 5-2, 5-3), et il entraîne les moteurs restants (5-1, 5-2, 5-3) au-delà de l'entraînement normal, pour réaliser par là-même une commande pour obtenir le même volume d'air qu'avant la survenue de l'anomalie.

13. Système de commande de plusieurs ventilateurs de refroidissement selon la revendication 9, dans lequel l'au moins un dispositif de traitement de signal comprend une pluralité de dispositifs de traitement de signal qui correspondent à une pluralité de moyens d'entraînement, et les dispositifs de la pluralité de dispositifs de traitement de signal reçoivent une information d'entraînement de moteurs (5-1, 5-2, 5-3) qui inclut un régime moteur cible exprimé en nombre de tours par minute RPM depuis le système de gestion de batterie (BMS) en commun, pour commander ainsi de manière indépendante une pluralité des moteurs (5-1, 5-2, 5-3).
